# EUROPEAN PATENT APPLICATION

(11) **EP 0 853 398 A2**
(43) Date of publication of application: **15.07.1998**
(21) Application number: 98300200.7
(22) Date of filing: 13.01.1998
(51) Int. Cl.: H04L 12/18

(54) **Communication systems, communication apparatus and communication methods**

(30) Priority: 14.01.1997 JP 4467/97
(71) Applicant: SONY CORPORATION, Tokyo 141 (JP)
(72) Inventor: Fujimori, Takahiro, Intel. Prop. Dept., Shinagawa-ku, Tokyo (JP); Tanaka, Tomoko, Intel. Prop. Dept., Shinagawa-ku, Tokyo (JP)
(74) Representative: Pilch, Adam John Michael

(57) **Abstract**

Multicast communication is performed, preferably in IEEE1394 standard communication. A first comparator (45) outputs 1 or 0 to an AND circuit (51) and to a transmission and receiving section in accordance with the value of a bus ID field extracted from a packet by a bus ID extraction circuit (42). An address decoder (47) converts the value of a physical ID field extracted by a physical ID extraction circuit (43) to an address of a multicast address control register (48). The multicast address control register (48) outputs the value of a storage area indicated by that address to the AND circuit (51). A second comparator (49) outputs 1 or 0 to the AND circuit (51) in accordance with the value of an offset address field extracted by an offset-address extraction circuit (44). The AND circuit (51) outputs the logical AND of all the supplied values to the transmission and receiving section. The transmission and receiving section receives packets in accordance with the value from the AND circuit (51) and the first comparator (45) of the determination circuit.

## Description

The present invention relates to communication systems, communication apparatus, and communication methods. More particularly but not exclusively, the present invention relates to such systems, apparatus and methods in which the value of a predetermined field of a data packet defined by the IEEE1394 standard may be set to a predetermined value and then a predetermined node transmits the data packet, and a plurality of predetermined nodes from among the other nodes receive the data packet on the basis of the value of the field.

In response to the recent increasingly higher performance of electronic equipment, a communication method conforming to the IEEE1394 standard (the IEEE1394 High-Performance Serial Bus) has been proposed as a communication method for electronic equipment.

In packets of asynchronous communication in the IEEE1394 standard, when a packet is transmitted (in the case of point-to-point communication) to one predetermined node (an information processing apparatus connected to the bus), the value of the bus ID field of the packet header is set to the bus ID of the bus to which the node of the destination is connected. When the bus to which the node of the destination is connected is a local bus, however, the value of the bus ID field of the packet header is set to 3FFH (H represents a hexadecimal number).

Further, in the case of the point-to-point communication, the value of the physical ID field of the packet header is set to a value, which is from 00H to 3EH, corresponding to the node of the destination.

In this way, in the case of the point-to-point communication, the packet is transmitted to the node corresponding to the value of the physical ID field from among the nodes which are connected to the bus corresponding to the value of the bus ID field.

Further, when a packet is transmitted to all the nodes connected to the bus (in the case of a broadcast communication), the value of the bus ID field of the packet header is set to the bus ID of the destination. When the destination is a local bus, however, the value of the bus ID field of the packet header is set to 3FFH. Further, in the case of broadcast communication, the value of the physical ID field of the packet header is set to 3FH.

In this way, in the case of broadcast communication, the packet is transmitted to all the nodes connected to the bus corresponding to the value of the bus ID field.

Therefore, in the case where, for example, data is supplied to a plurality of predetermined nodes from among all the nodes connected to the predetermined bus (that is, when multicast communication is performed), data is transmitted to all the nodes by using the broadcast communication. The node which does not require the data receives the data temporarily, and then determines if the data is required by processing the data by a microcomputer in accordance with a predetermined program, that is, by processing the data by software means. When the data is not required, the data is abandoned.

However, when data is processed by software means as described above, since a process for selecting a necessary packet from all the broadcast communication packets is performed, the load of the processing section which processes the packet and the data becomes heavy, and the processing takes time. Therefore, there is the problem of the possibility of the concurrent processing speed of other processing sections becoming decreased.

According to the present invention, the value of a predetermined field of a data packet such as one defined by the IEEE1394 standard is set to a predetermined value, and then data packets transmitted by a predetermined node are received by a plurality of predetermined nodes from among the other nodes on the basis of the value of the field.

Multicast communication which conforms to the IEEE1394 standard may thus be realized and further, a packet is selected by hardware means (by using a dedicated electronic circuit) so that the load of the processing section which processes data is reduced.

The invention will now be described by way of example with reference to the accompanying drawings, throughout which like parts are referred to by like references, and in which:
Fig. 1 is a block diagram illustrating the construction of an embodiment of a communication system of the present invention;
Fig. 2 is a block diagram illustrating an example of the construction of an information processing apparatus (node) of Fig. 1;
Fig. 3 is a block diagram illustrating an example of the construction of a determination circuit of Fig. 2;
Fig. 4 shows the format of an asynchronous communication packet;
Fig. 5 shows an example of the packet used during multicast communication in the communication system of Fig. 1;
Fig. 6 shows an example of the value of a multicast address control register of Fig. 3;
Fig. 7 shows an example of the multicast communication;
Fig. 8 shows an example of the value of an address control register;
Fig. 9 shows an example of the multicast communication in five nodes;
Fig. 10 shows another example of the multicast communication in five nodes;
Fig. 11 is a block diagram illustrating another example of the construction of a determination circuit of
Fig. 2;

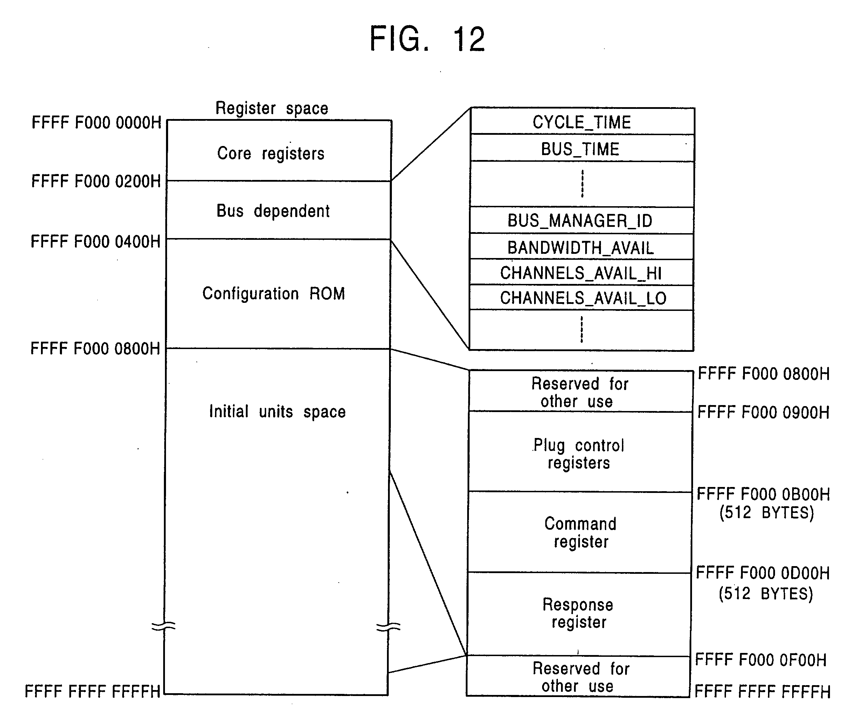

Fig. 12 shows an example of a register having various attributes stored therein;

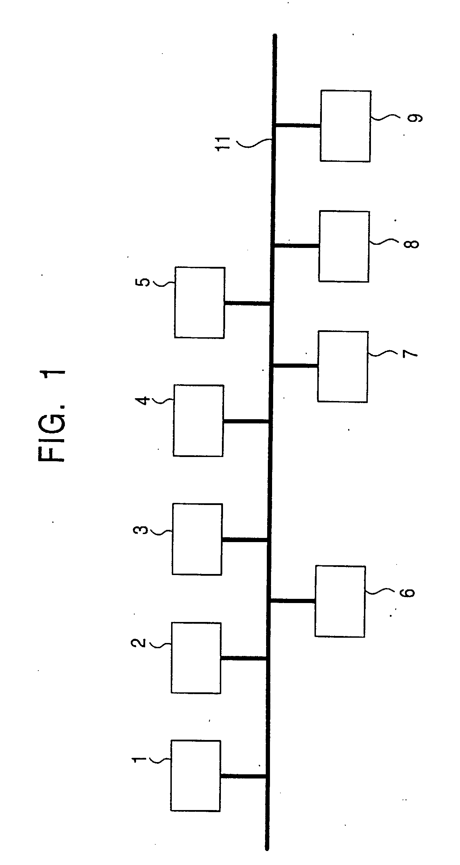

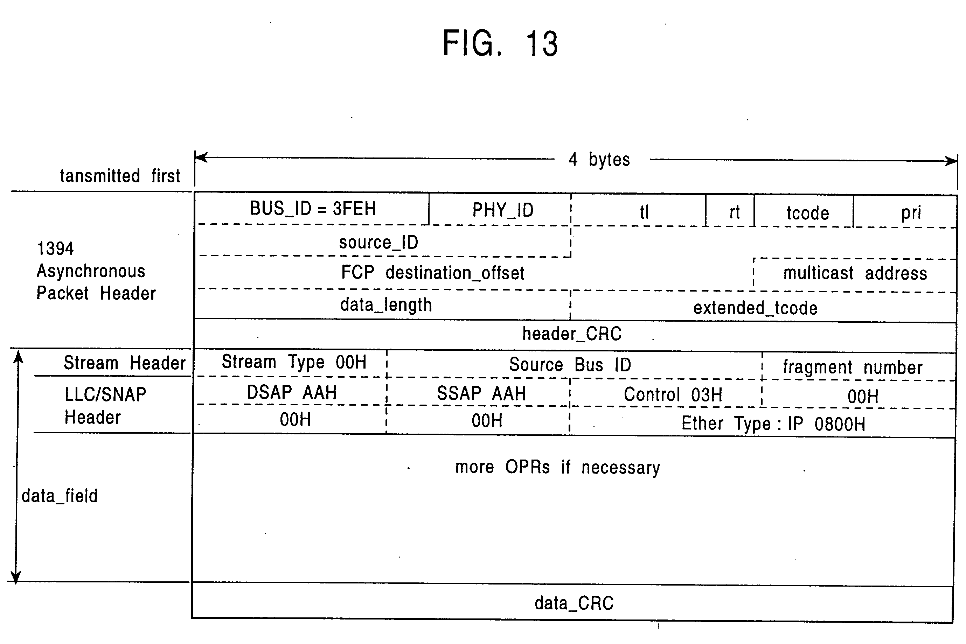

Fig. 13 shows another example of the packet used during multicast communication in the communication system of Fig. 1;

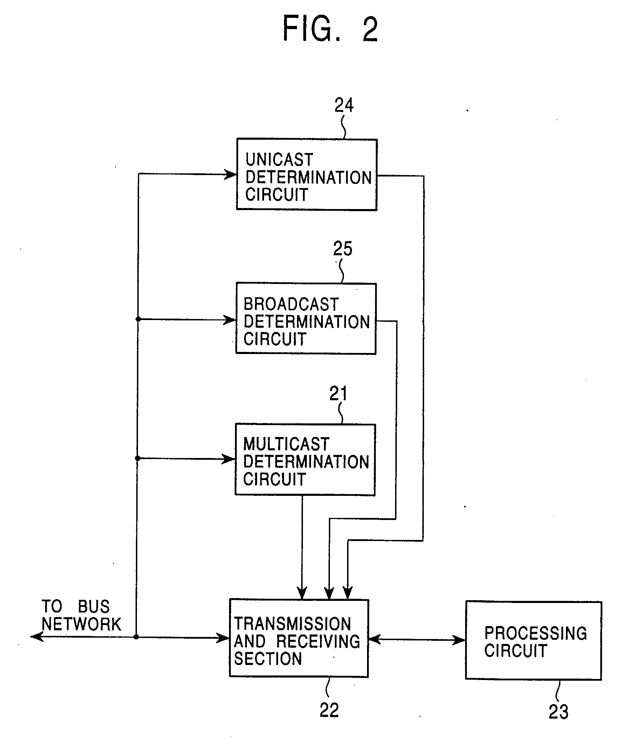

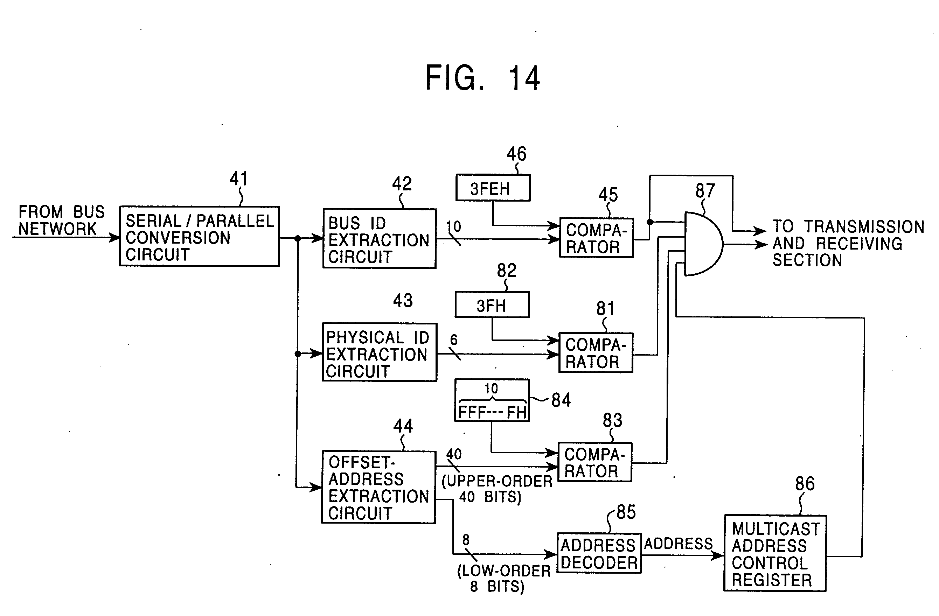

Fig. 14 is a block diagram illustrating an example of the construction of the determination circuit of Fig. 2, corresponding to the packet of Fig. 13;

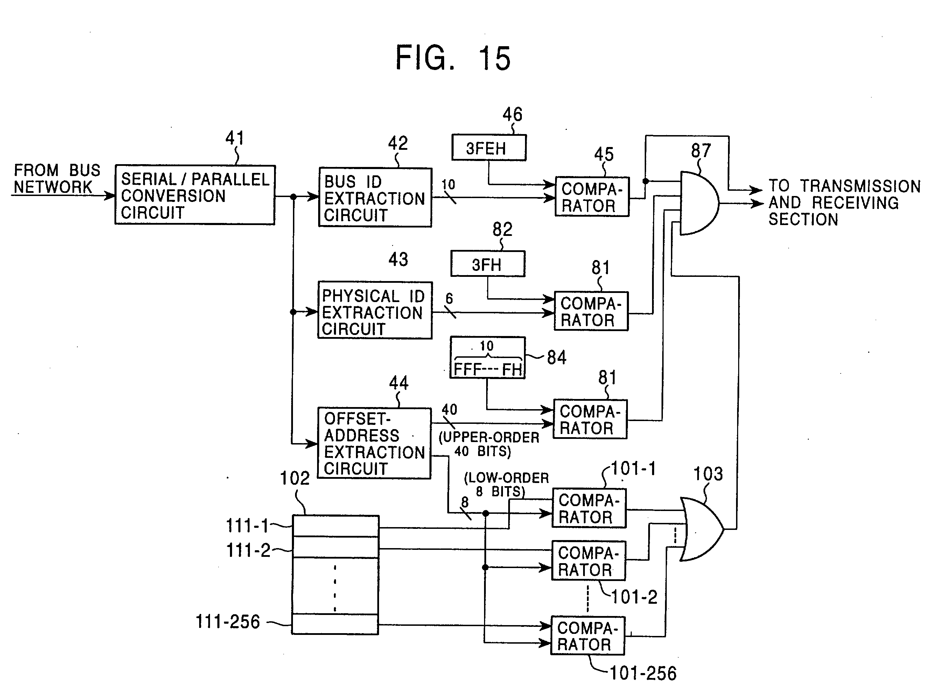

Fig. 15 is a block diagram illustrating another example of the construction of the determination circuit of Fig; 2, corresponding to the packet of Fig. 13; and

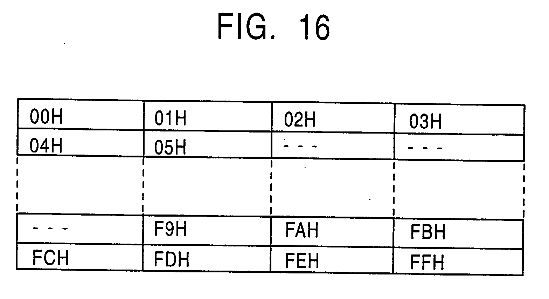

Fig. 16 shows an example of the value of a multicast address control register of Fig. 13.

Fig. 1 shows the construction of an embodiment of a communication system of the present invention. In this communication system, a plurality of information processing apparatuses (nodes) 1 to 9 are interconnected over a bus network 11.

Fig. 2 shows an example of the construction of the nodes 1 to 9 of Fig. 1 in which the communication apparatuses of the present invention are applied. A multicast determination circuit 21 refers to a predetermined part of the packet header of the packet of asynchronous communication in order to determine whether or not the packet is a packet (a multicast packet) of multicast communication and to determine whether or not the data packet is destined for the node, and outputs the determination result to a transmission and receiving section 22.

A unicast determination circuit 24 refers to a predetermined part of the packet header of the packet of asynchronous communication in order to determine whether or not the packet is a packet of unicast communication (communication in which the transmission side and the receiving side are in a one-to-one relationship) and to determine whether or not the data packet is destined for the node, and outputs the determination result to the transmission and receiving section 22.

A broadcast determination circuit 25 refers to a predetermined part of the packet header of the packet of asynchronous communication in order to determine whether or not the packet is a packet of broadcast communication and outputs the determination result to the transmission and receiving section 22.

The transmission and receiving section 22 receives a packet transmitted over the bus network 11 on the basis of the determination result supplied from the multicast determination circuit 21, the unicast determination circuit 24, and the broadcast determination circuit 25, outputs the data contained in the received packet to a processing section 23 (processing means), generates a packet on the basis of the data and the destination thereof supplied from the processing section 23, and outputs the packet to the bus network 11.

The processing section 23 performs a predetermined process on the data supplied from the transmission and receiving section 22, outputs the data and the destination thereof to the transmission and receiving section 22 when the data is transmitted to other nodes, and performs other various processes.

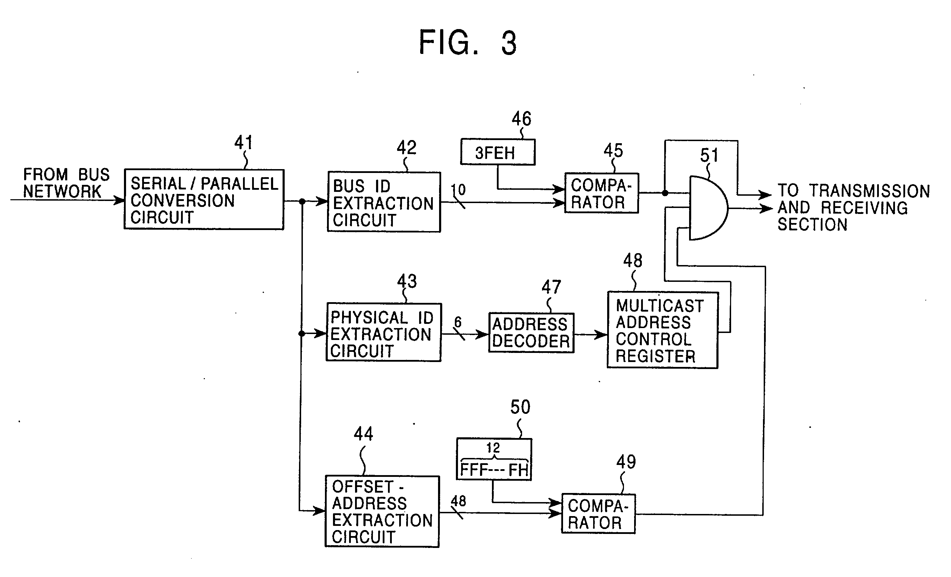

Fig. 3 shows an example of the construction of the multicast determination circuit 21. A serial/parallel conversion circuit 41 outputs the packet supplied in the form of bit strings from the bus network 11 to the bus ID extraction circuit 41, a physical ID extraction circuit 43, and an offset-address extraction circuit 44 at a predetermined bit width (e.g., 32 bits).

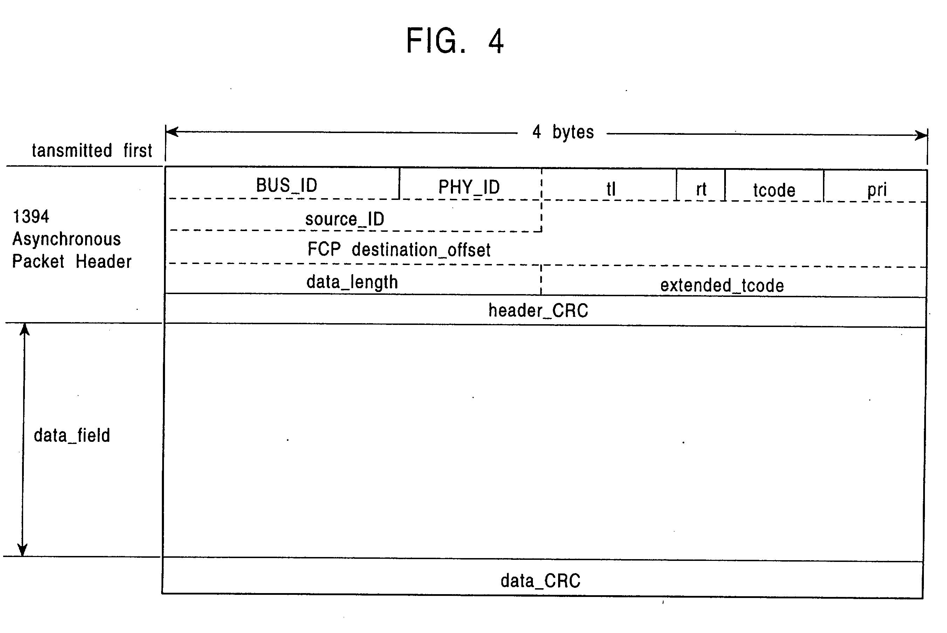

Fig. 4 shows the format of the packet of asynchronous communication of the IEEE1394 standard.

The first five quadlets (20 bytes) of the packet are a packet header. The following are located within the packet header: a bus ID (BUS_ID) corresponding to the bus to which the node of the destination of this packet is connected, a physical ID (PHY_ID) corresponding to the node, tl (Transaction Label) representing the label of processing, rt (Retry Code) representing retry of reproduction, and tcode (Transaction Code) representing the code of processing, and pri (Priority). Further, source_ID representing an originator is recorded, and further an offset address (FCP destination_offset) representing the low-order 48 bits of the address of the destination is located next to the source_ID.

Further, a data_length representing data length and an extended_tcode representing the other processing code are located next thereto, and a header_CRC which is an error detection code within the header is located at the end.

Further, a data field having data to be transmitted, and data_CRC which is an error detection code for the data are located.

A bus ID extraction circuit 42 extracts the value of the bus ID field (BUS_ID in Fig. 4), which is the first 10 bits of the packet, and outputs the value to a comparator 45 (first determination means).

The comparator 45 outputs 1 to an AND circuit 51 and the transmission and receiving section 22 when the value of the 10 bits from the bus ID extraction circuit 42 is equal to the value 3FEH which is supplied from a constant generation circuit 46, and outputs 0 when they are not equal.

The physical ID extraction circuit 43 extracts the value of the physical ID (PHY_ID in Fig. 4), which is the 11th to 16th bits of the packet, and outputs the value to an address decoder 47.

The address decoder 47 converts the value of the six bits supplied from the physical ID extraction circuit 43 into an address of the storage area where the information of the multicast address (the address assigned to the node which performs multicast communication) corresponding to the value is stored, and outputs the address to a multicast address control register 48 (second determination means).

The multicast address control register 48 has a storage area with the same number of bits as the prepared multicast addresses and outputs the value of the bits corresponding to the address supplied from the address decoder 47 to the AND circuit 51.

In the multicast address control register 48, the value of the bits corresponding to the multicast address which is assigned to the node in which the multicast determination circuit 21 is incorporated is previously set to 1, and the value of the other bits is set to 0.

In this case, since the multicast address is represented by 6 bits, the multicast address control register 48 may have a storage area of 64 (= 2⁶) bits.

In the case where the multicast address is represented by 7 or more bits, parts of the physical ID field and the bus ID field are used. For example, in the case where the multicast address is represented by 8 bits, the low-order 2 bits of the physical ID field and the bus ID field are used. In this case, the value of the low-order 2 bits of the bus ID field varies according to the value of the multicast address which becomes the destination. Also, when the multicast address is represented by 8 bits, the multicast address control register 48 requires a storage area of 256 (= 2⁸) bits.

The offset-address extraction circuit 44 extracts the value of the offset address field (FCP destination_offset in Fig. 4), which is the 7th to 12th bytes of the packet, and outputs the value to the comparator 49.

The comparator 49 outputs 1 to the AND circuit 51 when the value of the 48 bits (6 bytes) from the offset-address extraction circuit 44 is equal to the value FFFFFFFFFFFFH supplied from a constant generation circuit 50 and outputs 0 when they are not equal.

The AND circuit 51 computes the logical AND of the values supplied from the comparator 45, the multicast address control register 48, and the comparator 49, and outputs the value to the transmission and receiving section 22.

Next, the operation of the node of Fig. 2 when packets are received will be described.

The serial/parallel conversion circuit 41 of the multicast determination circuit 21 outputs the packet (bit strings) supplied over the bus network 11 to the bus ID extraction circuit 42, the physical ID extraction circuit 43, and the offset-address extraction circuit 44 at a predetermined bit width.

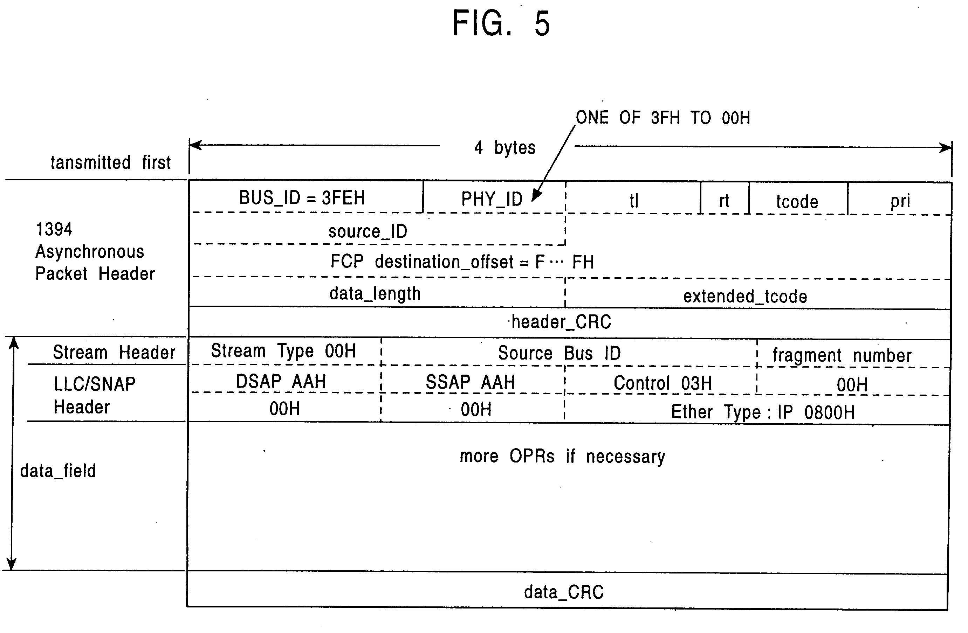

Fig. 5 shows an example of the packet supplied during multicast communication. In this packet, the value of the bus ID field is set to 3FEH, the value of the physical ID field is set to one value of 00H to 3FH, which is the multicast address of the node of the destination of this packet, and the value of the offset address field (FCP destination_offset in the figure) is set to FFFFFFFFFFFFH.

Further, in this packet, an IP (Internet Protocol) packet which is formed into a capsule by an LLC/SNAP (Logical Link Control/Subnetwork Access Protocol) method is transmitted, the data field (data_field in the figure) thereof having a stream header and an LLC/SNAP header.

The stream header (Stream Header), as shown in Fig. 5, is made up of stream type (Stream Type), source bus ID (Source Bus ID), and fragment number (Fragment Number). The LLC/SNAP header is made up of DSAP (Destination Service Address Point), SSAP (Source Service Address Point), type (Control) of LLC, and EtherType representing the type of the protocol.

The bus ID extraction circuit 42 of Fig. 3 extracts the value of the first 10 bits (BUS_ID field in Fig. 4) of the packet supplied from the serial/parallel conversion circuit 41 and outputs the value to the comparator 45.

When the 10-bit value from the bus ID extraction circuit 42 is equal to the value 3FEH supplied from the constant generation circuit 46, the comparator 45 outputs 1 to the AND circuit 51 and the transmission and receiving section 22 and outputs 0 when they are not equal. That is, in the case where the supplied packet is a multicast communication packet, since the value of the bus ID field is 3FEH, 1 is output from the comparator 45, and otherwise, 0 is output.

Meanwhile, the physical ID extraction circuit 43 extracts the value of the 11th to 16th bits (PHY_ID in Fig. 4) of the packet and outputs the value to the address decoder 47.

The address decoder 47 converts the value of the 6 bits supplied from the physical ID extraction circuit 43 into an address of the storage area where the information of the multicast address corresponding to that value is stored, and outputs the address to the multicast address control register 48.

The multicast address control register 48 outputs the value (1 when set so as to perform multicast communication, and otherwise, 0) of the storage area corresponding to the address supplied from the address decoder 47 to the AND circuit 51.

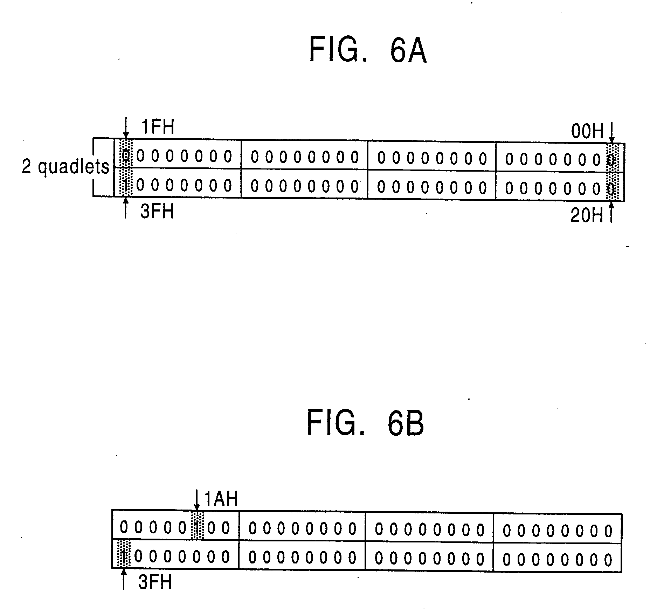

Fig. 6A shows an example of information stored in the multicast address control register 48. For example, in the case where a multicast address (address assigned to the node which performs multicast communication) of 3FH is assigned to a predetermined node, in the multicast address control register 48 of that node, as shown in Fig. 6A, the value of the bit corresponding to 3FH is previously set to 1.

Meanwhile, Fig. 6B shows the value of the multicast address control register 48 of the node to which the multicast address of 1AH is assigned. Further, the value of the bit corresponding to the multicast address (in this case, 3FH) used to specify all the nodes which perform multicast communication is previously set to 1.

The offset-address extraction circuit 44 extracts the value of the 7th to 12th bytes (FCP destination_offset in Fig. 4) of the packet supplied from the serial/parallel conversion circuit 41 and outputs the value to the comparator 49.

The comparator 49 outputs 1 to the AND circuit 51 when the value of the 48 bits (6 bytes) from the offset-address extraction circuit 44 is equal to the value FFFFFFFFFFFFH supplied from the constant generation circuit 50 and outputs 0 when they are not equal.

The AND circuit 51 computes the logical AND of the values supplied from the comparator 45, the multicast address control register 48, and the comparator 49, and outputs the computation result to the transmission and receiving section 22. That is, when the supplied packet is a multicast communication packet destined for the node having the multicast determination circuit 21 incorporated therein, the AND circuit 51 outputs 1 to the transmission and receiving section 22, and otherwise, outputs 0 to the transmission and receiving section 22.

Further, in a similar manner, the unicast determination circuit 24 determines whether the supplied packet is a multicast communication packet and outputs the determination result to the transmission and receiving section 22. The broadcast determination circuit 25 determines whether the supplied packet is a broadcast communication packet and outputs the determination result to the transmission and receiving section 22.

The transmission and receiving section 22 receives the packet supplied over the bus network 11 when the value from the AND circuit 51 of the multicast determination circuit 21 is 1 (that is, when the supplied packet is a multicast communication packet destined for this node).

On the other hand, when the value from the comparator 45 of the multicast determination circuit 21 is 0 (that is, when the supplied packet is not a multicast communication packet, but a unicast-communication packet or a broadcast-communication packet), the transmission and receiving section 22 determines whether or not the packet supplied over the bus network 11 should be received according to the determination result from the unicast determination circuit 24 and the broadcast determination circuit 25.

The transmission and receiving section 22 does not receive the supplied packet when the value from the AND circuit 51 of the multicast determination circuit 21 is 0 and the value from the comparator 45 of the multicast determination circuit 21 is 1 (that is, when the supplied packet is a multicast communication packet, but is not destined for this node).

Upon receiving the packet, the transmission and receiving section 22 outputs the data contained in the packet to the processing section 23. Then, the processing section 23 performs a predetermined process on the data.

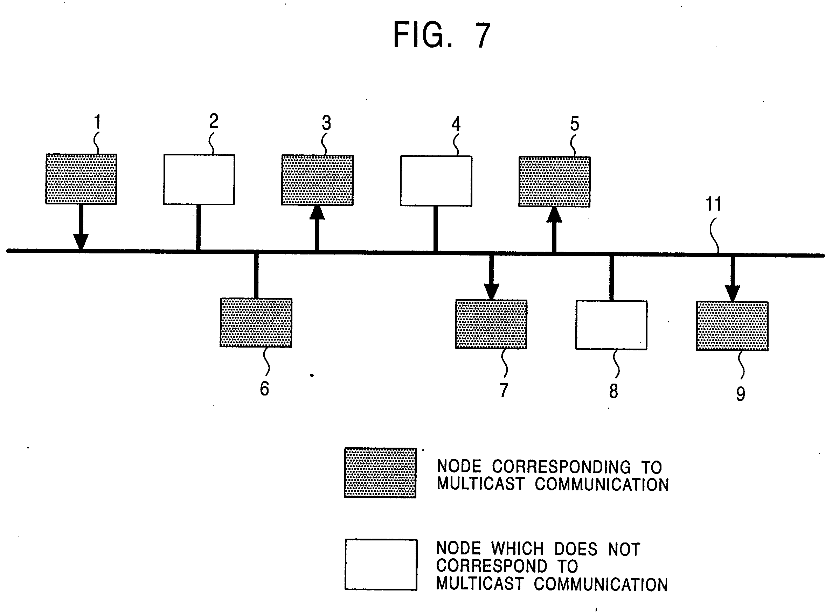

For example, in the case where the values of the multicast address control registers 48 of nodes 1, 3, 5, 6, 7, and 9 of Fig. 1 are set as shown in Figs. 6(A) and 6(B), when node 1 outputs the multicast communication packet such that the value of the physical ID field is 3FH to the bus network 11, as shown in Fig. 7, nodes 3, 5, 6, 7, and 9 receive the packet over the bus network 11. That is, nodes 2, 4, and 8 do not receive the packet.

Further, for example, in the case where the values of the multicast address control registers 48 of nodes 6, 7, and 9 are set as shown in Fig. 6B, when node 1 outputs the multicast communication packet such that the value of the physical ID field is 1AH to the bus network 11, only the nodes 6, 7, and 9 receive the packet.

In the above-described way, the multicast communication packet is received by the predetermined nodes corresponding to the packet.

At least one of the nodes 1 to 9 connected to the bus network 11 is required to manage each multicast address in the multicast communication.

The node which manages the multicast address has incorporated therein an address control register with the same number of bits as the number of previously prepared multicast addresses, and appropriately sets the value of the bits corresponding to the multicast address which is in use to 0 and the value of the bits corresponding to the multicast address which is not in use to 1. The address control register may be provided as an independent storage section or provided in a reserved area of a register space of IEEE1394.

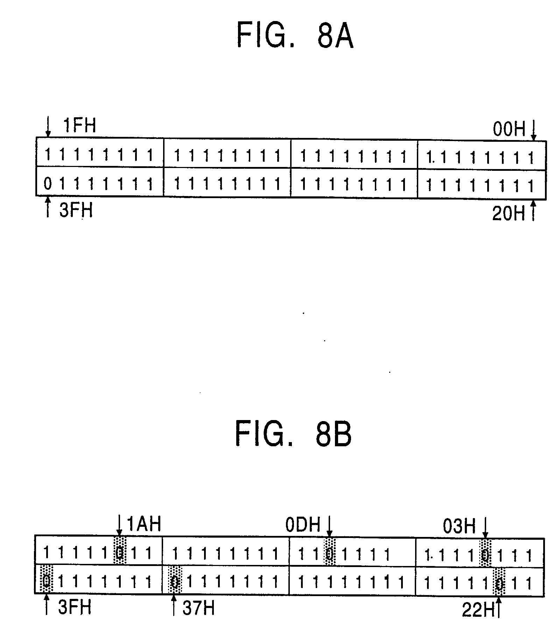

Therefore, in this address control register, the initial value of all the bits, excluding the bits corresponding to the address 3FH indicating all the nodes corresponding to the the multicast communication, is set to 1 as shown in Fig. 8A. Thereafter, the node assigns a multicast address which is not used to a node which performs multicast communication when the multicast communication is established, and changes the value of the bits of the address control register corresponding to the address to 0 as shown in Fig. 8B. When the value of that address control register is set as shown in Fig. 8B, 03H, 0DH, 1AH, 22H, 37H, and 3FH are used as multicast addresses.

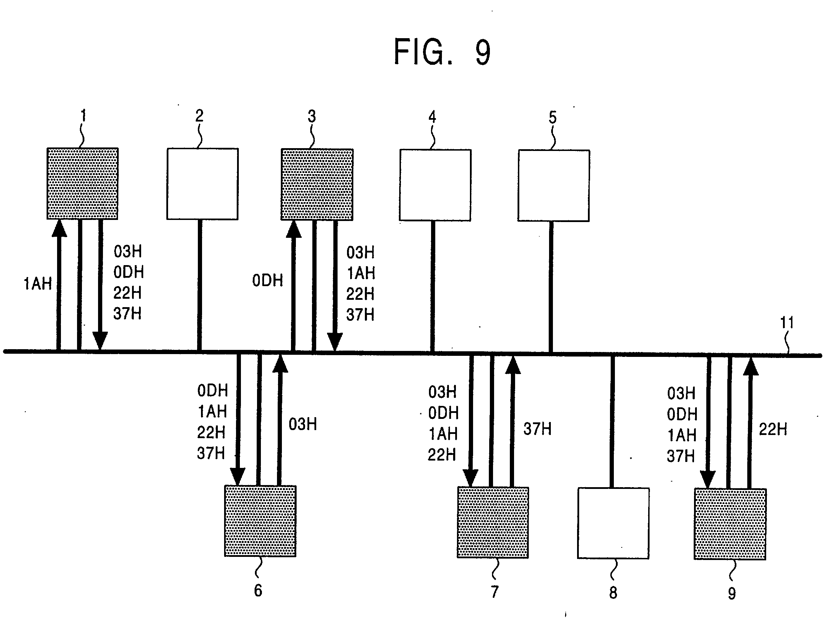

For example, as shown in Fig. 9, in the case where 03H, 0DH, 22H, and 37H are assigned as multicast addresses to node 1, 03H, 1AH, 22H, and 37H are assigned as multicast addresses to node 3, 0DH, 1AH, 22H, and 37H are assigned as multicast addresses to node 6, 03H, 0DH, 1AH, and 22H are assigned as multicast addresses to node 7, and 03H, 0DH, 1AH, and 37H are assigned as multicast addresses to node 9, the value of the address control register is as shown in Fig. 8B.

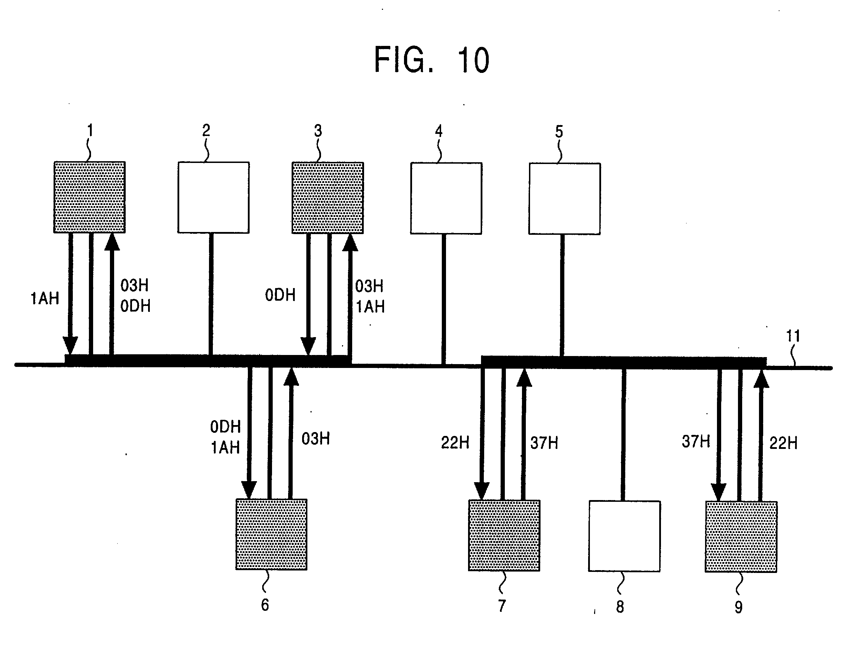

Further, as shown in Fig. 10, in the case where 03H and 0DH are assigned as multicast addresses to node 1, 03H and 1AH are assigned as multicast addresses to node 3, 0DH and 1AH are assigned as multicast addresses to node 6, 22H is assigned as a multicast address to node 7, and 37H is assigned as a multicast address to node 9, the value of the address control register is also as shown in Fig. 8B.

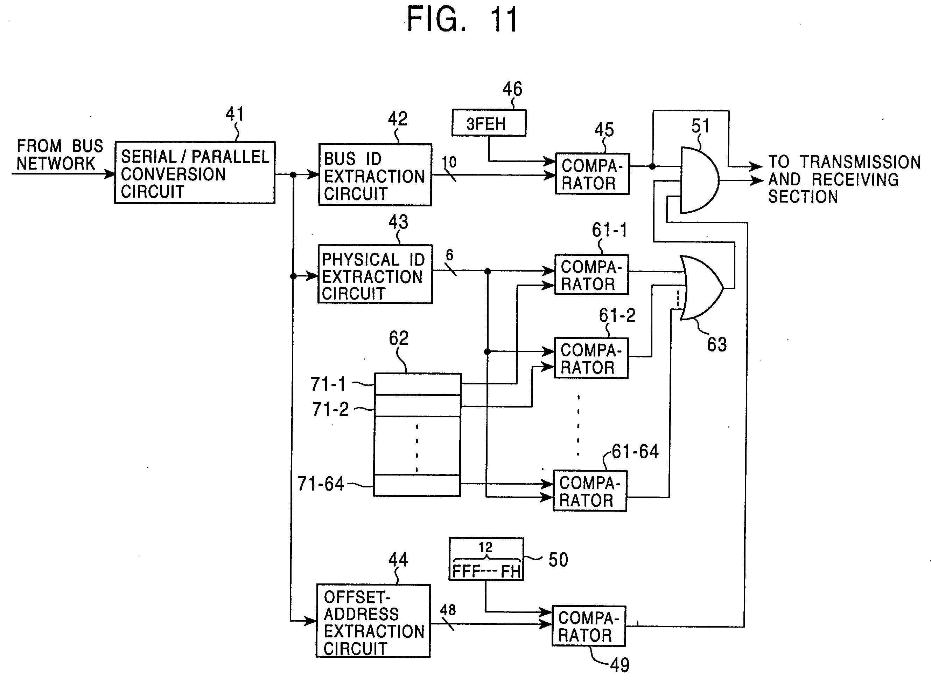

Fig. 11 shows another example of the construction of the multicast determination circuit 21. This multicast determination circuit 21 is provided with comparators 61-1 to 61-64 (second determination means), a register 62, and an OR circuit 63 in place of the address decoder 47 and the multicast address control register 48 of the multicast determination circuit 21 of Fig. 3 and therefore, only the comparators 61-1 to 61-64, the register 62, and the OR circuit 63 will be described.

The comparator 61-i (i = 1, ···, 64) outputs 1 to the OR circuit 63 when the 6-bit value from the physical ID extraction circuit 43 is equal to the value of an i-th storage area 71-i of the register 62, and outputs 0 to the OR circuit 63 when they are not equal.

The register 62 has at least 64 storage areas 71-1 to 71-64, in which the multicast addresses assigned to the nodes having this multicast determination circuit 21 are sequentially stored in advance, starting from the first storage area 71-1, and a value other than 00H to 3FH, for example, FFH, is stored in the remaining storage areas.

The OR circuit 63 computes the logical OR of the values from the comparators 61-1 to 61-64 and outputs the computation result to the AND circuit 51.

Next, the operation of the comparators 61-1 to 61-64, the register 62, the OR circuit 63 will be described.

The comparator 61-i (i = 1, ···, 64) outputs 1 to the OR circuit 63 when the 6-bit value from the physical ID extraction circuit 43 is equal to the value of the i-th storage area 71-i, and outputs 0 to the OR circuit 63 when they are not equal.

The OR circuit 63 computes the logical OR of the values from the comparators 61-1 to 61-64 and outputs the computation result to the AND circuit 51.

At this time, the register 62 has sequentially stored therein the multicast addresses assigned to the nodes having the multicast determination circuit 21 starting from the the storage area 71-1 and has stored therein a value other than 00H to 3FH, for example, FFH in the remaining storage areas. Therefore, when the number of previously assigned multicast addresses is denoted as Na, the value of the physical ID field in the packet is compared with the assigned multicast address by comparators 61-1 to 61-Na from among the comparators 61-1 to 61-64.

Each of the multicast address control register 48 of Fig. 3 and the register 62 of Fig. 11 may be provided as an independent storage section. Instead, a reserved storage area (for example, FFFFF0000F00H to FFFFFFFFFFFFH in Fig. 12) in the register in which attributes which are dependent upon the type of the bus are stored, such as that shown in Fig. 12, may be used as the multicast address control register 48 or the register 62.

Although in the above-described embodiment, as shown in Fig. 4, a multicast address is written into the physical ID field in the packet, as shown in Fig. 13, a multicast address may be written into a part (for example, the last one byte) of the offset address field (FCP destination_offset). At this time, the value of the physical ID field is set to a preset value (for example, 3FH), and the value of the first 5 bytes of the offset address field is set to FFFFFFFFFFH.

Fig. 14 shows an example of the construction of the multicast determination circuit 21 corresponding to the packet of Fig. 13. The serial/parallel conversion circuit 41, the bus ID extraction circuit 42, the physical ID extraction circuit 43, the comparator 45, and the constant generation circuit 46 of the multicast determination circuit 21 are the same as those of the multicast determination circuit 21 of Fig. 3 and therefore, a description thereof has been omitted.

When the 6-bit value from the physical ID extraction circuit 43 is equal to the value 3FH supplied from a constant generation circuit 82, a comparator 81 outputs 1 to an AND circuit 87 and outputs 0 when they are not equal.

The offset-address extraction circuit 44 extracts the value of the offset address field of 48 bits in the same manner as the offset-address extraction circuit 44 of Fig. 3, outputs the value of the upper-order 40 bits thereof to a comparator 83, and outputs the value of the low-order 8 bits thereof to an address decoder 85.

When the 40-bit value from the offset-address extraction circuit 44 is equal to the value FFFFFFFFFFH provided from a constant generation circuit 84, the comparator 83 outputs 1 to the AND circuit 87 and outputs 0 when they are not equal.

The address decoder 85 converts the 8-bit value supplied from the offset-address extraction circuit 44 into an address of the storage area which stores the information of the multicast address corresponding to that value and outputs the address to a multicast address control register 86 (second determination means).

The multicast address control register 86 has a storage area with the same number of bits as the number of prepared multicast addresses and outputs the value of the bits corresponding to the address supplied from the address decoder 85 to the AND circuit 87.

In the multicast address control register 86, the value of the bits corresponding to the multicast address which is assigned to the node having this multicast determination circuit 21 incorporated therein is previously set to 1, and the value of the other bits is set to 0.

That is, the multicast address control register 86 has stored therein information (the state of use) corresponding to 256 (= 2⁸) multicast addresses by 256 bits in accordance with the 8-bit value.

The AND circuit 87 computes the logical AND of the values provided from the comparator 45, the comparator 81, the comparator 83, and the multicast address control register 86, and outputs the computation result to the transmission and receiving section 22.

Next, the operation of the multicast determination circuit 21 will be described.

The serial/parallel conversion circuit 41 outputs the packet (bit strings) supplied over the bus network 11 to the bus ID extraction circuit 42, the physical ID extraction circuit 43, and the offset-address extraction circuit 44 at a predetermined bit width.

The bus ID extraction circuit 42 extracts the value of the bus ID field (BUS_ID in Fig. 13) which is the first 10 bits of the packet and outputs the value to the comparator 45.

When the 10-bit value from the bus ID extraction circuit 42 is equal to the value 3FEH supplied from the constant generation circuit 46, the comparator 45 outputs 1 to the AND circuit 87 and the transmission and receiving section 22, and outputs 0 when they are not equal. That is, when the supplied packet is a multicast communication packet, since the value of the bus ID field is 3FEH, 1 is output from the comparator 45, and otherwise, 0 is output.

Meanwhile, the physical ID extraction circuit 43 extracts the value of the physical ID field (PHY_ID in Fig. 13), which is the 11th to 16th bits of the packet, and outputs the value to the comparator 81.

When the 6-bit value from the physical ID extraction circuit 43 is equal to the value 3FH provided from the constant generation circuit 82, the comparator 81 outputs 1 to the AND circuit 87, and otherwise, outputs 0. That is, when the supplied packet is a multicast communication packet (the packet shown in Fig. 13), since the value of the physical ID field is 3FH, 1 is output from the comparator 81, and 0 is output when they are not equal.

Further, the offset-address extraction circuit 44 extracts the value of the offset address field (FCP destination_offset in Fig. 13), which is the 7th to 12th bytes of the packet, outputs the value of the upper-order 40 bits thereof to the comparator 83, and outputs the value of the low-order 8 bits to the address decoder 85.

When the 40-bit value from the offset-address extraction circuit 44 is equal to the value FFFFFFFFFFH provided from the constant generation circuit 84, the comparator 83 outputs 1 to the AND circuit 87 and outputs 1 when they are not equal.

Meanwhile, the address decoder 85 converts the 8-bit value provided from the offset-address extraction circuit 44 into an address of the storage area for storing the information of the multicast addresses corresponding to that value, and outputs the address to the multicast address control register 86.

The multicast address control register 86 outputs the value (1 when set so as to perform multicast communication, and otherwise 0) of the storage area corresponding to the address provided from the address decoder 85 to the AND circuit 87.

The AND circuit 87 computes the logical AND of the values provided from the comparators 45, 81, and 83, and the multicast address control register 86, and outputs the computation result to the transmission and receiving section 22. That is, when the supplied packet is a multicast communication packet which is destined for the node having this multicast determination circuit 21 incorporated therein, the AND circuit 87 outputs 1 to the transmission and receiving section 22, and otherwise, outputs 0 to the transmission and receiving section 22.

In the above-described way, when the multicast communication packet shown in Fig. 13 is supplied, in the same manner as in the multicast determination circuit 21 of Fig. 3, the comparator 45 of the multicast determination circuit 21 outputs 1 to the transmission and receiving section 22. Further, when the packet is destined for the node having this multicast determination circuit 21 incorporated therein, the AND circuit 87 of the multicast determination circuit 21 outputs 1 to the transmission and receiving section 22.

Fig. 15 shows another example of the construction of the multicast determination circuit 21 corresponding to the packet of Fig. 13. This multicast determination circuit 21 is provided with comparators 101-1 to 101-256 (second determination means), a register 102, and an OR circuit 103 in place of the address decoder 85 and the multicast address control register 86 of the multicast determination circuit 21 of Fig. 14 and therefore, only the comparators 101-1 to 101-256, the register 102, and the OR circuit 103 will be described.

When the 8-bit value from the offset-address extraction circuit 44 is equal to the value of an i-th storage area 111-i of the register 102, a comparator 101-i (i = 1, ···, 256) outputs 1 to the OR circuit 103, and otherwise, outputs 0 to the OR circuit 103.

As shown in Fig. 16, the register 102 has at least 256 storage areas 111-1 to 111-256, in which the multicast addresses assigned to the nodes having this multicast determination circuit 21 are sequentially stored in advance starting from the first storage area 111-1, and a value other than 00H to FFH is stored in the remaining storage areas.

The OR circuit 103 computes the logical OR of the values from the comparators 101-1 to 101-256 and outputs the computation result to the AND circuit 87.

Next, the operation of the comparators 101-1 to 101-256, the register 102, and the OR circuit 103 will be described.

When the 8-bit value from the offset-address extraction circuit 44 is equal to the value of an i-th storage area 111-i of the register 102, a comparator 101-i (i = 1, ···, 256) outputs 1 to the OR circuit 103, and otherwise, outputs 0 to the OR circuit 103.

The OR circuit 103 computes the logical OR of the values from the comparators 101-1 to 101-256 and outputs the computation result to the AND circuit 87.

At this time, the register 102 has sequentially stored therein in advance the multicast addresses assigned to the nodes having this multicast determination circuit 21 starting from the first storage area 111-1, and a value other than 00H to FFH is stored in the remaining storage areas. Therefore, when the number of previously assigned multicast addresses is denoted as Na, the value of the offset address field in the packet is compared with the assigned multicast address by the comparators 101-1 to 101-Na from among the comparators 101-1 to 101-256.

In this way, in each node, the value of the offset address field in the packet is compared with the assigned-multicast address.

In the above-described way, by writing the multicast address of the node which is the destination of the packet into the physical ID field or the offset address field in the packet, multicast communication is performed.

The present invention is not limited to the above-described embodiment, and can be applied to other systems, apparatuses, and others.

Many different embodiments of the present invention may be constructed without departing from the scope of the present invention. It should be understood that the present invention is not limited to the specific embodiment described in this specification. On the contrary, the present invention is intended to cover various modifications and equivalent arrangements included within the scope of the invention as hereafter claimed.

## Claims

1. A data structure for packets transmitted from a transmission apparatus to a receiving apparatus over a transmission line, said data structure having:
a packet header containing an ID number; and
a data field containing transmission information,
wherein said packet header and/or said data field have a multicast structure which addresses n (1<n<N, N is the total number of apparatuses) number of apparatuses by a single packet.

2. A data structure according to claim 1, wherein said multicast structure is present in said packet header.

3. A data structure according to claim 2, wherein said packet header includes a bus ID, a physical ID, and an offset-address ID, and said multicast structure is contained in said physical ID.

4. A data structure according to claim 2, wherein said packet header includes a bus ID, a physical ID, and an offset-address ID, and said multicast structure is contained in said offset-address ID.

5. A transmission method of transmitting packets over a transmission line, said transmission method comprising:
a packet header formation step of forming a packet header containing an ID number; and
a data field formation step of forming a data field containing transmission information,
wherein a data structure having a multicast structure which addresses n (1<n<N, N is the total number of apparatuses) number of apparatuses by a single packet is formed in said packet header formation step and/or said data field formation step.

6. A transmission method according to claim 5, wherein said multicast structure is present in said packet header.

7. A transmission method according to claim 6, wherein said packet header includes a bus ID, a physical ID, and an offset-address ID, and said multicast structure is contained in said physical ID.

8. A transmission method according to claim 6, wherein said packet header includes a bus ID, a physical ID, and an offset-address ID, and said multicast structure is contained in said offset-address ID.

9. A transmission method according to claim 5, wherein said data structure complies with the IEEE1394 standard.

10. A receiving method of receiving packets over a transmission line, said receiving method comprising:
an ID comparison step of receiving a packet header containing an ID number and comparing said ID with the ID of a subject apparatus; and
a multicast signal receiving step of receiving a signal indicating a multicast structure which addresses n (1<n<N, N is the total number of apparatuses) number of apparatuses by a single packet.

11. A receiving method according to claim 10, wherein said multicast structure is present in said packet header.

12. A receiving method according to claim 11, wherein said packet header includes a bus ID, a physical ID, and an offset-address ID, and said multicast structure is contained in said physical ID.

13. A receiving method according to claim 11, wherein said packet header includes a bus ID, a physical ID, and an offset-address ID, and said multicast structure is contained in said offset-address ID.

14. A receiving method according to claim 10, wherein said packets comply with the IEEE1394 standard.

15. A receiving apparatus for receiving packets over a transmission line, said receiving apparatus comprising:
ID comparison means for receiving a packet containing an ID number and comparing said ID with the ID of a subject apparatus; and
multicast signal receiving means for receiving a signal indicating a multicast structure which addresses n (1<n<N, N is the total number of apparatuses) number of apparatuses by a single packet.

16. A receiving apparatus according to claim 15,
wherein said multicast signal receiving means comprises:
physical ID extraction means for extracting a physical ID; and
multicast control signal extraction means for extracting a multicast control signal from an output of said physical ID extraction means.

17. A receiving apparatus according to claim 15,
wherein said multicast signal receiving means comprises:
physical ID extraction means for extracting a physical ID;
register means for holding predetermined addresses; and
comparison means for comparing an output from said physical ID extraction means with an output from said register means.

18. A receiving apparatus according to claim 15,
wherein said multicast signal receiving means comprises:
physical ID extraction means for extracting a physical ID;
offset-address extraction means for extracting an offset address; and
multicast control signal extraction means for extracting a multicast control signal from an output of said offset-address extraction means.

19. A receiving apparatus according to claim 15,
wherein said multicast signal receiving means comprises:
physical ID extraction means for extracting a physical ID;
offset-address extraction means for extracting an offset address;
register means for holding predetermined addresses; and
comparison means for comparing an output from said offset-address extraction means with an output from said register means.

20. A receiving apparatus according to claim 15, wherein said packet complies with the IEEE1394 standard.

21. A transmission and receiving apparatus for transmitting packets over a transmission line, said transmission and receiving apparatus comprising:
packet header formation means for forming a packet header containing an ID number;
data field formation means for forming a data field containing transmission information;
ID comparison means for receiving a packet header containing an ID number and comparing said ID with the ID of a subject apparatus; and
multicast signal receiving means,
wherein a data structure having a multicast structure which addresses n (1<n<N, N is the total number of apparatuses) number of apparatuses by a single packet is formed in said packet header formation means and/or said data field formation means, and
said multicast signal receiving means receive data having said multicast structure.

22. A transmission and receiving apparatus according to claim 21, wherein said packets comply with the IEEE1394 standard.

23. An information processing apparatus for processing information by transmitting packets over a bus line, said information processing apparatus comprising:
a bus line through which information is transmitted; and
transmission and receiving means connected to said bus line,
wherein said transmitting and receiving means comprise:
packet header formation means for forming a packet header containing an ID number;
data field formation means for forming a data field containing transmission information;
ID comparison means for receiving a signal containing an ID number and comparing said ID with the ID of a subject apparatus; and
multicast signal receiving means,
wherein a data structure having a multicast structure which addresses n (1<n<N, N is the total number of apparatuses) number of apparatuses by a single packet is formed in said packet header formation means and/or said data field formation means, and
said multicast signal receiving means receive data having said multicast structure.

24. An information processing apparatus according to claim 23, wherein said packets comply with the IEEE1394 standard.
